# EUROPÄISCHE PATENTSCHRIFT

(11) **EP 2 339 319 B1**
(45) Veröffentlichungstag und Bekanntmachung des Hinweises auf die Patenterteilung: **29.04.2020**
(21) Anmeldenummer: 10016040.7
(22) Anmeldetag: 23.12.2010
(51) Int. Cl.: G01M 17/06

(54) **Achsspielprüfeinrichtung**
Axle clearance testing device
Dispositif de vérification du jeu d'axe

(30) Priorität: 23.12.2009 DE 102009060304
(43) Veröffentlichungstag der Anmeldung: 29.06.2011
(73) Patentinhaber: Sherpa Autodiagnostik GmbH, 84453 Mühldorf (DE)
(72) Erfinder: Rischke, Manfred, 84453 Mühldorf (DE)
(74) Vertreter: Manitz Finsterwald Patent- und Rechtsanwaltspartnerschaft mbB

(56) Entgegenhaltungen:
- EP-A2- 0 151 951
- WO-A1-94/03773
- DE-A1- 3 703 260

## Beschreibung

Die vorliegende Erfindung betrifft eine Achsspielprüfeinrichtung bestehend aus einer oberen zur Abstützung eines Rads eines Fahrzeuges ausgelegten Platte, die in einer Ebene in zwei voneinander verschiedenen Richtungen durch Fremdkraftbetätigung bewegbar ist. Solche Achsspielprüfeinrichtungen sind bekannt. Beispiele für eine Achsspielprüfeinrichtung dieser Art sind der EP-A-0151951 sowie der WO94/03773A1 zu entnehmen, wobei die zuletzt genannte Schrift zum Einbau in einer Schiene einer Hebebühne ausgelegt ist.

Mittels einer solchen Achsspielprüfeinrichtung werden die Räder einer Achse eines Fahrzeugs so gerüttelt, dass etwaiges Spiel in der Lenkung bei der Lagerung des Rades oder bei der Radaufhängung sichtbar gemacht wird. Normalerweise kommen zwei solche Achsspielprüfeinrichtungen zum Einsatz, eine für das linke Vorderrad und eine für das rechte Vorderrad des Fahrzeugs. Dies ist allerdings nicht zwingend erforderlich, da bei der Verwendung einer Achsspielprüfeinrichtung für das eine Rad die Rüttelbewegungen dieses Rades über die Karosserie bzw. das Fahrgestell an das zweite Rad auf der anderen Seite des Fahrzeugs übertragen werden, wodurch auch dort vorhandenes Spiel sichtbar gemacht wird. Solche Achsspielprüfeinrichtungen sind normalerweise so ausgelegt, dass die Platte in Längs- und Querrichtung des darauf abgestützten Rads bzw. des entsprechenden Fahrzeugs, d.h. in zwei zueinander senkrechten Richtungen, bewegbar ist.

Um diese Bewegungen zu realisieren, wird die Platte auf zwei parallel zueinander verlaufende Führungen geführt, die in eine der zwei Richtungen orientiert sind, und diese zwei Führungen sind wiederum auf zwei weitere ebenfalls parallel zueinander verlaufende Führungen in der zweiten der zwei Richtungen geführt. Die Führungspaare für die beiden Richtungen sind in zwei übereinander angeordneten Ebenen angeordnet, und dies schafft auch Platz für die zwei doppelt wirkenden Zylinder, die das eine Führungspaar in der einen Richtung und die Platte auf das andere Führungspaar in der dazu senkrechten Richtung bewegt. Die zwei doppelt wirkenden Zylinder, welche zueinander gekreuzt angeordnet sind, liegen ebenfalls in zwei unterschiedlichen Ebenen. Ein weiteres Beispiel für eine Achsspielprüfeinrichtung mit unteren und oberen Kolbeneinheiten (dort Plungereinheiten genannt) ist der DE-A-37 03 260 zu entnehmen. Diese an sich bekannte Konstruktion wird meistens in einer in etwa quaderförmigen Aussparung bzw. in einem Ausschnitt im Boden einer Werkstatt bzw. in einer Fahrschiene einer Hebebühne oder Grube verwendet, damit die bewegliche Platte zumindest im Wesentlichen mit der Oberfläche des Bodens bzw. der Fahrschiene bündig liegt. Dies ist bei neuen Anlagen relativ leicht machbar, da die Aussparung beim Vergießen der Bodenplatte und die Aufnahme bei der Konstruktion der Hebebühne in die Fahrschiene integriert werden kann. Bei einem nachträglichen Einbau stellt die Schaffung einer Aussparung im Boden bzw. einer Aufnahme in einer Fahrschiene einen erheblichen Aufwand dar, zumal bei einer Fahrschiene die Festigkeit der Gesamtkonstruktion wenigstens neu berechnet bzw. neu abgenommen werden muss.

Im Übrigen sind die bisher bekannten Konstruktionen relativ schwer und daher auch kostspielig. Sie erfordern darüber hinaus einen relativ hohen Materialeinsatz.

Der vorliegenden Erfindung liegt die Aufgabe zugrunde, eine zuverlässig arbeitende, verhältnismäßig leichte und in der Bauhöhe verhältnismäßig niedrige Achsspielprüfeinrichtung zu schaffen, die auch nachträglich in einer Werkstatt oder an einer Fahrschiene kostengünstig installiert werden kann.

Zur Lösung dieser Aufgabe wird erfindungsgemäß eine Achsspielprüfeinrichtung der eingangs genannten Art mit den kennzeichnenden Merkmalen des Anspruchs 1 vorgesehen.

Besonders günstig ist, dass bei dieser Ausführung die Führung für die in zwei voneinander verschiedenen Richtungen bewegliche Platte in einer Ebene liegt und insbesondere dass die bewegliche Platte an einem Ring befestigt ist, der innerhalb der Führung mit Spiel angeordnet ist oder oberhalb der Führung liegt und auf dieser gleitbar ist, wobei die Fremdkraftbetätigung innerhalb des Rings sich befindet und an diesen zur Bewegung der Platte angreift.

Hierdurch kann die Achsspielprüfeinrichtung mit einer relativ kleinen Bauhöhe und deutlich herab gesetztem Materialbedarf hergestellt werden, so dass es nicht erforderlich ist, eine Aussparung in der Bodenplatte einer Werkstatt oder in einer Fahrschiene einer Hebebühne oder Grube vorzusehen, sondern die Achsspielprüfeinrichtung kann direkt am Boden bzw. an der Fahrschiene angebracht bzw. angeschraubt werden, wodurch ein nachträglicher Einbau kostengünstig realisiert werden kann. Auch bei einem Neubau kann die erfindungsgemäße Achsspielprüfeinrichtung kostengünstig eingeplant und eingebaut werden.

Wie bisher sind die zwei voneinander verschiedenen Richtungen so zu verstehen, dass die Platte in Längs- und Querrichtung des darauf abgestützten Rades bzw. des entsprechenden Fahrzeugs bewegbar ist. Dies ist allerdings nicht zwingend erforderlich, da die Bewegungsrichtungen auch anders gewählt werden können.

Während beim Stand der Technik die Platte mittels der zwei Führungspaare zwangsgeführt ist, wird sie bei der Erfindung freischwimmend angeordnet und gerade nicht zwangsgeführt sozusagen führungslos, wie in der Figurenbeschreibung näher erläutert wird.

Besonders günstig ist es, wenn die Führung die Platte in deren Umfangsbereich abstützt. Diese Anordnung kann nicht nur so realisiert werden, dass die Platte nicht in unerwünschter Weise durchbiegt oder kippt, wenn das Fahrzeug darauf fährt, sondern auch so, dass mit einer ausreichenden Überlappung der Führung durch die Platte die Führung frei von Schmutzeinwirkung gehalten werden kann.

Die Führung ist vorzugsweise durch einen Rahmen gebildet, der mit reibungsminderndem Gleitmaterial an der der Platte zugewandten Fläche versehen bzw. verkleidet ist. Dabei ist die Höhe des Rahmens der Führung ausreichend groß bemessen, dass ein etwaig vorgesehener Ring sowie die Fremdkraftbetätigung innerhalb des Rahmens und unterhalb der Platte Platz hat. Der Ring kann mit Vorteil von der Platte hängend innerhalb der Führung liegen. Er wird sozusagen mit der Platte schwimmend gelagert, ohne dass er eine eigene Führung benötigt.

Alternativ hierzu kann die Führung durch einen Rahmen gebildet werden, die mit reibungsminderndem Gleitmaterial an der der Platte zugewandten Fläche versehen bzw. verkleidet ist und an einer Bodenplatte oder Trageinrichtung befestigt ist, die die Achsspielprüfeinrichtung nach unten abschließt und am Boden der Werkstatt bzw. an einer Fahrschiene einer Hebebühne oder einer Grube befestigbar ist.

Gemäß einer bevorzugten Ausführungsform ist die Führung durch einen Rahmen gebildet, der mit reibungsminderndem Gleitmaterial an der der Platte zugewandten Fläche versehen bzw. verkleidet ist und ferner ist die Platte an zwei entgegengesetzten Seiten nach unten abgewinkelt, um das Anfahren und Abfahren des zu prüfenden Fahrzeugs zu ermöglichen.

Die bewegliche Platte ist an einem Ring befestigt, der beispielsweise als rechteckiger oder quadratischer Ring ausgebildet sein kann, der innerhalb der Führung mit Spiel angeordnet ist, wobei die Fremdkraftbetätigung sich innerhalb des Rings befindet und an diesen zur Bewegung der Platte angreift. Das Spiel ist so gewählt, dass die erforderliche Bewegungsamplitude der Platte in die beiden Richtungen gewährleistet ist. Diese Anordnung trägt nicht nur zu einer kompakten Ausführung bei, sondern versteift die Platte so, dass diese trotz niedrigem Gewicht stabil bleibt.

Die Fremdkraftbetätigung kann auf verschiedenen Wegen realisiert werden.

Die Fremdkraftbetätigung kann beispielsweise durch vier getrennt ansteuerbare Kraftzylinder gebildet sein, die paarweise entgegengesetzt in zwei voneinander verschiedenen Richtungen angeordnet sind. Die vier Kraftzylinder können im Vergleich zu den bisher bekannten Kraftzylindern kleiner ausgebildet werden, so dass sie vom Preis her gesehen durchaus wettbewerbsfähig sind, zumal nur einfach wirkende Kraftzylinder erforderlich sind. Ferner sind die Kraftzylinder vom Durchmesser her eher kleiner als eine Anordnung mit zwei Kraftzylindern, wodurch ebenfalls die Kosten herab gesetzt werden und die Bauhöhe der Achsspielprüfeinrichtung weiter reduziert werden kann. Einfach wirkende Kraftzylinder sind deshalb möglich, da bei jedem Paar der entgegengesetzten Kraftzylinder das durch Druckfluidzufuhr bewirkte Ausfahren des einen Kraftzylinders eine Kraft auf den Ring ausübt, die zum Zurückstellen des jeweils anderen zuletzt ausgefahrenen Kraftzylinders führt.

Bei einer solchen Fremdkraftbetätigung wird eine Schalteinrichtung vorgesehen, die die Kraftzylinder jedes Paares wechselweise oder anderweitig ansteuert. Solche Schalteinrichtungen sind auch bei den bisherigen Achsspielprüfeinrichtungen im Einsatz. Es ist daher nicht erforderlich, die Schalteinrichtung im Detail zu beschreiben.

Besonders günstig ist es, wenn nach dem Ausfahren des einen Zylinders des einen Paares der Ansteuerdruck vor dem Ausfahren des einen Zylinders des jeweils anderen Paares herabgesetzt wird und umgekehrt. Auf diese Weise wird eine verbleibende Kraft zwischen den Stempeln des einen Zylinderpaares und der Innenseite des Rings und daher auch die Reibungskräfte, die dort wirken, herabgesetzt, wodurch Abnützungs- und Verkantungseffekte weitestgehend vermieden werden können. Diese Funktion kann durch preisgünstig erhältliche Druckminderungsventile bewirkt werden, die am Ende des Stempelhubes des jeweils ausgefahrenen Kraftzylinders aufgesteuert werden. Noch einfacher kann das Herabsetzen des Druckes am Ende des Hubes dadurch bewerkstelligt werden, dass die üblicherweise elektromagnetisch betätigbaren Ventile nach Abschluss der Stempelbewegung wieder kurzfristig geöffnet werden, um den Druck im Zylinder herabzulassen. Dann werden sie wieder geschlossen, damit der Stempel nicht unerwünscht zurückweicht.

Bei einer Auslegung der Achsspielprüfeinrichtung werden die zwei Zylinderpaare jeweils abwechselnd angesteuert, obwohl sie auch so angesteuert werden können, dass die Platte mehrmals in eine der zwei Richtungen hin und her bewegt wird und erst dann in der zweiten der genannten Richtungen ebenfalls hin und her bewegt wird. Solche Bewegungen bzw. Bewegungsfolgen sind aus dem Stand der Technik bekannt. Sie können automatisch ablaufen oder vom Prüfer, der üblicherweise in einer Grube unterhalb des Autos oder unterhalb der Hebebühne steht, vorgegeben werden, beispielsweise mittels einer Handsteuereinrichtung wie eine kabellose Infrarotsteuerung. Eine alternative Auslegung der Achsspielprüfeinrichtung zeichnet sich dadurch aus, dass die Fremdkraftbetätigung durch zwei jeweils mit Druckfluid ausfahrbare und einfahrbare Kraftzylinder, d.h. doppelt wirkende Kraftzylinder, realisiert wird, die an der Platte bzw. am Ring angreifen und kreuzförmig angeordnet sind. Bei einer solchen Anordnung ist es möglich, durch gezieltes Positionieren der zwei Kraftzylinder diese so anzuordnen, dass sie im Wesentlichen in einer Ebene liegen, die jeweiligen Stempel aber aneinander vorbei bewegt werden können, beispielsweise dadurch, dass jeder Stempel eine Ausbiegung oder eine Aussparung für den jeweils anderen Stempel aufweist.

Mit anderen Worten liegen bei einer gekreuzten Anordnung der zwei Kraftzylinder die Stempel entweder in geringfügig unterschiedlichen, aber unmittelbar benachbarten Ebenen oder weisen jeweils eine Mulde oder eine Aussparung auf, so dass die Zylinder zumindest im Wesentlichen in einer Ebene liegen und nicht zu einer unnötigen Erhöhung der Bauhöhe der Achsspielprüfeinrichtung führen.

Gemäß einer weiteren alternativen Auslegung ist die Fremdkraftbetätigung durch zwei mittels Druckfluid ansteuerbare und ausfahrbare Kraftzylinder gebildet, die jeweils mittels einer Federeinrichtung zurück versetzbar sind.

Hierdurch sind nur zwei einfach wirkende Kraftzylinder erforderlich, wobei allerdings die hierdurch eingesparten Kosten zum Teil für die Komplikation der erforderlichen Rückstellfedereinrichtungen wieder eingebüßt werden. Diese Komplikation ist aber nicht unbedingt störend, wenn in einer weiteren Alternative Kraftzylinder eingesetzt werden, deren Stempel durch die Federkraft einer Schraubenfeder ausgefahren und durch Fluiddruck wieder eingefahren werden. Dabei können die Schraubenfedern konzentrisch zum Stempel innerhalb der Zylinder oder außerhalb der Zylinder angeordnet werden.

Ferner könnten zur Zurückstellung der Stempel Blattfedern verwendet werden, wobei das freie Ende der Stempel in der Mitte der vorgebogenen Blattfedern und die Enden der Blattfedern am Ring abgestützt sind, wodurch nach Druckabnahme am Kraftzylinder die Blattfeder, die während des Anfahrens des Stempels des entsprechenden Kraftzylinders abgeflacht wird und den Ring verschiebt, entspannt und den Stempel in den entsprechenden Zylinder zurück schiebt.

Die Kraftzylinder sind vorzugsweise mittels Öldruck hydraulisch betätigbar, könnten aber auch mit Druckluft betätigt werden.

Die Erfindung macht es möglich, eine Achsspielprüfeinrichtung vorzusehen, deren Gesamtbauhöhe bei der Auslegung für Fahrzeuge bis zu 3,5 Tonnen 70 mm oder weniger beträgt und bei der Auslegung für Fahrzeuge mit einem Gesamtgewicht im Bereich über 3,5 Tonnen 100 mm oder weniger beträgt.

Besonders bevorzugte Ausführungen der erfindungsgemäßen Achsspielprüfeinrichtung sind den Unteransprüchen sowie der weiteren Beschreibung zu entnehmen.

Die Erfindung wird nachfolgend anhand von Ausführungsbeispielen unter Bezugnahme auf die Zeichnung näher erläutert, in der zeigen:
- Fig. 1: eine schematische Draufsicht auf eine erfindungsgemäße Achsspielprüfeinrichtung von oben bei abgenommener Platte gesehen, alle Maße sind in mm angegeben, wie auch in den weiteren Figuren,
- Fig. 2: eine perspektivische Ansicht einer praktischen Ausführung einer Achsspielprüfeinrichtung gemäß Fig. 1, auch hier ohne Platte,
- Fig. 3: eine vergrößerte Darstellung eines Teils der Fig. 2 ebenfalls in perspektivischer Darstellung,
- Fig. 4: eine Darstellung ähnlich der Fig. 2, jedoch mit der oberen Platte eingezeichnet, die zwecks der Darstellung auf drei Seiten verkürzt dargstellt ist,
- Fig. 5: eine Darstellung einer erfindungsgemäßen Ausführungsform ähnlich der Fig. 1, jedoch mit Zugfedern als Rückstellmittel für die in dieser Ausführung verwendeten einfach wirkenden Kraftzylinder,
- Fig. 6: eine Darstellung einer weiteren erfindungsgemäßen Ausführungsform mit zwei einfach wirkenden Kraftzylindern und Rückstellfeder,
- Fig. 7: eine Darstellung eines Kraftzylinders mit integrierter Schraubenfeder, die zur Anwendung in einer erfindungsgemäßen Achsspielprüfeinrichtung geeignet ist,
- Fig. 8: eine Darstellung eines weiteren Kraftzylinders mit integrierter Schraubenfeder, die ebenfalls zur Anwendung in einer erfindungsgemäßen Achsspielprüfeinrichtung geeignet ist,
- Fig. 9: eine schematische Darstellung ähnlich der Fig. 2, jedoch von einer alternativen Ausführungsform mit gekreuzten Kraftzylindern und
- Fig. 10: eine alternative Darstellung, bei der der Ring auf eine Führung gleitet, die unterhalb des Ringes angeordnet ist.

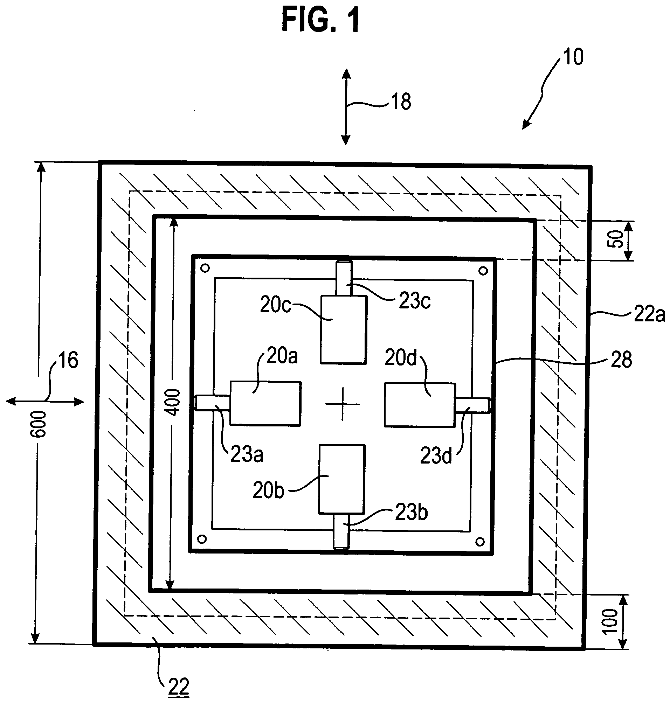

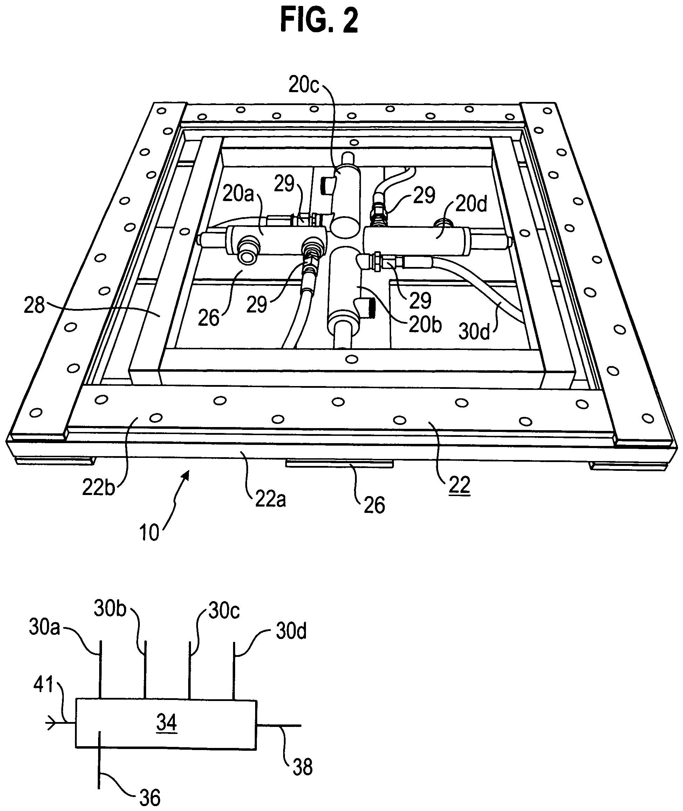

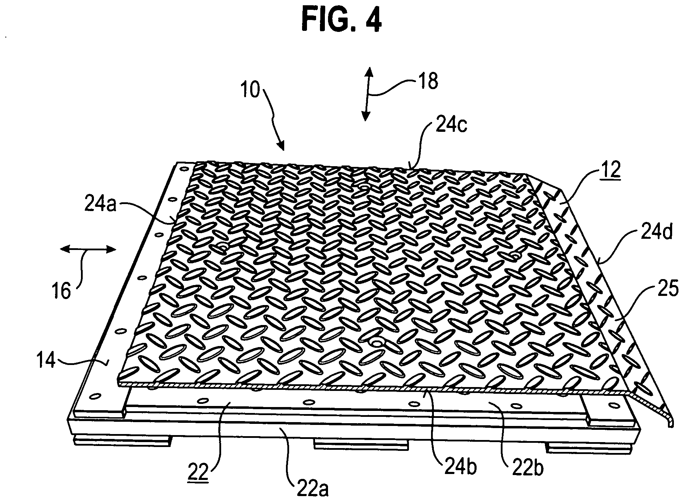

Bezug nehmend auf die Fig. 1 bis 4 wird dort eine Achsspielprüfeinrichtung 10 gezeigt bestehend aus einer oberen zur Führung eines Rades ausgelegten Platte 12 (nur in Fig. 4 zu sehen), die in einer Ebene 14 in zwei voneinander verschiedenen Richtungen 16, 18 durch Fremdkraftbetätigung mittels der Kraftzylinder 20a, 20b, 20c und 20d bewegbar ist. Die Amplitude dieser Bewegung kann beispielsweise 50 mm oder 100 mm betragen. Die Führung 22 für die in zwei voneinander verschiedenen Richtungen 16, 18 bewegliche Platte 12 liegt im Wesentlichen bis auf etwaige abgewinkelten Bereiche in einer horizontalen Ebene, die Ebene 14. Die gezeigte Achsspielprüfeinrichtung ist derart ausgebildet, dass die Platte 12 in Längs- und Querrichtung des darauf abgestützten Rades bzw. des entsprechenden Fahrzeugs bewegbar ist. D.h. die Richtung 16 entspricht der Längsrichtung und die Richtung 18 entspricht der Querrichtung des Fahrzeugs.

Wie insbesondere aus der Fig. 4 ersichtlich ist, stützt die Führung 22 die Platte 12 in deren Umfangsbereich ab. Hierzu ist zu sagen, dass die Platte in Fig. 4 zwecks der Darstellung an den Seiten 24a, 24b, 24c verkürzt dargestellt ist. Die weitere Seite 24d der hier im Wesentlichen quadratischen Platte ist abgewinkelt und bildet somit eine Auflaufschräge, die es einem Fahrzeug ermöglicht, problemlos mit dem vorderen oder hinteren Rad auf die Platte aufzufahren. Die Seite 24a ist in der Praxis auf vorteilhafte Weise auch mit einem abgewinkelten Bereich (spiegelsymmetrisch der Abwinklung 26) versehen, damit das Fahrzeug problemlos von der Achsspielprüfeinrichtung bzw. der Platte, beispielsweise in die Richtung 16, fahren kann. Die Abmessung der Platte zwischen den abgewinkelten Bereichen 26 muss der entsprechenden Abmessung der Führung 22 zuzüglich der Gesamtamplitude der durch die Kraftzylinder bewirkten Hin- und Herbewegung der Platte entsprechen. Gegebenenfalls kann die Platte wenigstens an den Seiten 24a und 24d abgewinkelt sein oder mit einem Anbauteil versehen werden, das die Führung hintergreift und ein Kippen der Platte verhindert, wenn man nicht bereit sein sollte, sich darauf zu verlassen, dass ein Kippen ohnehin nicht auftritt, beispielsweise weil die Platte im Restzustand so positioniert ist, dass die Seite 24d nahe an der Führung steht oder weil die Seite 24d dies durch Bodenkontakt oder anderweitig verhindern wird.

Wie insbesondere aus den Fig. 1 bis 3 ersichtlich, ist die bewegliche Platte 12 an einem Ring 28 befestigt, der innerhalb der Führung 22 mit Spiel angeordnet ist, wobei die hier gezeigten vier Kraftzylinder 20a, 20b, 20c, 20d zur Fremdkraftbetätigung innerhalb des Ringes 28 sich befinden und an diesen zur Bewegung der Platte 12 schleifend angreifen.

Wie in den Fig. 1, 2 und 3 ersichtlich, ist die Führung 22 durch einen Rahmen 22a gebildet, der mit reibungsminderndem Gleitmaterial, hier in Form von am Rahmen 22a angeschraubten PTFE-Streifen 22b an der der Platte 12 zugewandten Fläche versehen bzw. verkleidet ist. Ferner ist die Rahmenhöhe h ausreichend groß bemessen, dass der Ring 28 sowie die Führung 22 und die Fremdkraftbetätigung 20a, 20b, 20c, 20d innerhalb des Rahmens 22a und unterhalb der Platte 12 Platz hat, und zwar so, dass der Ring 28 oberhalb einer die Führung 22 nach unten abschließenden Bodenplatte 26 schwimmend angeordnet ist, ohne an dieser zu reiben. Die Bodenplatte 26, die die Achsspielprüfeinrichtung nach unten abschließt und an der der Rahmen 22a angeschweißt oder anderweitig befestigt ist, ist am Boden bzw. an einer Fahrschiene einer Hebebühne oder einer Grube (alle nicht gezeigt) befestigbar. In dem konkreten Beispiel der Fig. 1 bis 4 ist die Bodenplatte 26 durch gekreuzt angeordnete Flachstahlplatten gebildet, könnte aber anders ausgebildet werden, beispielsweise mittels einer durchgehenden Platte.

Die vier getrennt ansteuerbaren Kraftzylinder 20a, 20b, 20c, 20d, die zur Fremdkraftbetätigung der Platte 11 vorgesehen sind, sind paarweise entgegengesetzt in zwei voneinander verschiedenen Richtungen angeordnet, die den Richtungen 16 bzw. 18 entsprechen. Die vier Kraftzylinder 20a, 20b, 20c und 20d sind an der Bodenplatte 26 befestigt, beispielsweise durch Klammern, die die Kraftzylinder umfassen und an der Bodenplatte verschraubt oder verschweißt sind oder durch Laschen, die mit den Zylindern und der Bodenplatte verschweißt sind.

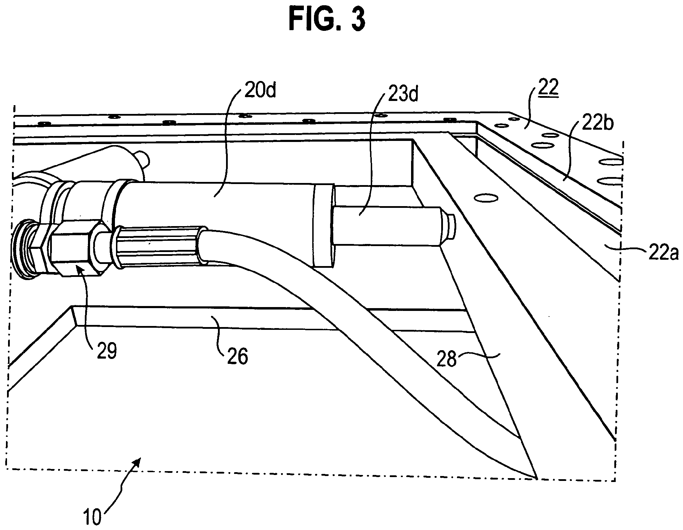

Wie insbesondere aus der Fig. 3 ersichtlich ist, weist jeder Kraftzylinder 20a, 20b, 20c, 20d einen ausfahrbaren Stempel wie 23d in Fig. 3 auf, dessen freies Ende an der Innenseite des Rings 28 anliegt und beim Ausfahren des jeweiligen Kraftzylinders (wie 20d) bzw. des entsprechenden Stempels (wie 23d) den Ring 28 in die entsprechende Richtung (d.h. die Längsrichtung des jeweiligen Kraftzylinders bzw. Stempels) verschiebt.

Bei jeden Paar der entgegengesetzten Kraftzylinder 20a, 20b, 20c, 20d führt das durch Druckfluidzufuhr bewirkte Ausfahren des einen Zylinders 20a, 20c zu einer Kraft, die den Ring 28 in Längsrichtung des ausgefahrenen Stempels bewegt und über den Ring zu einer Kraft, die zur Rückstellung des jeweils anderen 20b, 20d zuletzt ausgefahrenen Zylinders führt. Wie ersichtlich, wird jeder Kraftzylinder 20a, 20b, 20c und 20d mit einem jeweiligen Anschluss 29 für die Druckfluidzufuhr bzw. zur Ablassung des Druckfluids vorgesehen, der an einen flexiblen Schlauch 30a, 30b, 30c, 30d angeschlossen ist. Die Schläuche 30a, 30b, 30c, 30d führen zu einer Schalteinrichtung 34, die die Kraftzylinder jedes Paares wechselweise ansteuert. Konkret wird die Schalteinrichtung von einer Druckmittelquelle, wie eine Druckluftquelle, über die Leitung 36 gespeist, und aus den Anschlüssen austretende Luft wird über die Schläuche 30a, 30b, 30c, 30d sowie die Schalteinrichtung und deren Ausgang 38 in die Atmosphäre abgelassen bzw. abgeblasen. Die Schalteinrichtung selbst wird normalerweise über Funk vom Prüfer betätigt, wobei die Funksignale über die Antennen 41 empfangen werden. Der Prüfer kann die Achsspielprüfeinrichtung ein- und ausschalten und vorgeben, in welche der zwei Richtungen 16 bzw. 18 die Platte 12 hin und her bewegt werden soll, sofern er nicht die abwechselnde Richtung wählt.

Sollte eine hydraulische Anlage verwendet werden, was bevorzugt ist, so wird die Schalteinrichtung von einer Pumpe mit hydraulischem Öl, das von einem Speicher entnommen wird, über den Eingang 36 gespeist. Das aus den Kraftzylindern austretende Öl, das bei Zurückstellung der Kraftzylinder entsteht, wird über die Schalteinrichtung und deren Ausgang 38 in einen Vorratstank für das hydraulische Öl zurückgeführt. Egal, ob mit Druckluft oder mit hydraulischem Öl betrieben, wird vorzugsweise nach dem Ausfahren des einen Zylinders 20a des einen Paares 20a, 20d der Ansteuerdruck herabgesetzt vor dem Ausfahren des einen Zylinders 20b des jeweils anderen Paares 20b, 20c und umgekehrt. Dies kann durch entsprechende in der Schalteinrichtung 34 eingebaute Druckminderungsventile (nicht gezeigt) erreicht werden, die aufgesteuert werden, sobald der Zylinderdruck ansteigt, was stets am Ende der jeweiligen Ausfahrbewegung passiert. Hierdurch wird sichergestellt, dass keine erheblichen Reibungskräfte von dem einen Zylinderpaar 20a, 20d bzw. 20b, 20c auf den Ring einwirken, während das jeweils andere Zylinderpaar 20b, 20c bzw. 20a, 20d bemüht ist, den Ring in eine Richtung senkrecht zum ersten Zylinderpaar zu bewegen. Dies setzt die Abnützung an den freien Enden der Stempel sowie die für die Bewegung des Ringes erforderlichen Kräfte deutlich herab. Die zwei Zylinderpaare 20a, 20d und 20b, 20c werden somit jeweils abwechselnd angesteuert.

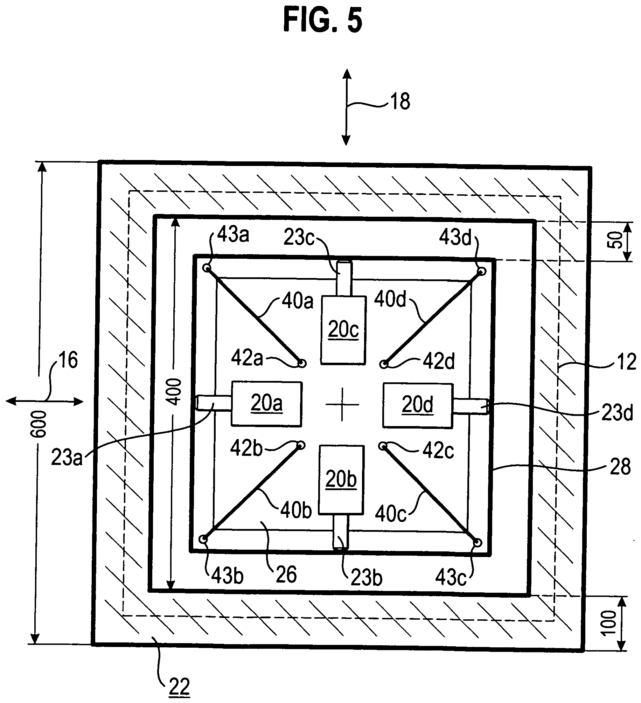

Obwohl eine relativ einfache Schalteinrichtung 34 ohne weiteres im Stande ist, die Ausführungsform gemäß Fig. 1 bis 4 zu betreiben, kann die Schalteinrichtung weiter vereinfacht werden und können die Größe und daher die Kosten für die Kraftzylinder und die Bauhöhe der Achsspielprüfeinrichtung herabgesetzt werden, wenn die einfach wirkenden Kraftzylinder mit Federkraft zurückgestellt werden. Eine Möglichkeit dies zu realisieren, ist in Fig. 5 dargestellt.

An dieser Stelle wird kurz auf die Wirkungsweise der Achsspielprüfeinrichtung eingegangen, und zwar mit Bezugnahme auf die Fig. 1. Zunächst wird unterstellt, dass das Fahrzeug selten exakt auf der Mitte der Platte positioniert wird. Für die nachfolgende Erläuterung wird unterstellt, dass das Rad in Fig. 1 über dem Zylinder 20b steht. Es leuchtet ein, dass, wenn der Stempel 23a des Zylinders 20a jetzt ausgefahren wird, die Platte und der Ring 28 aufgrund der Radlast sich um das Rad zu drehen versuchen wird, wodurch das in Fig. 1 obere linke Ecke des Rings 28 an dem Rahmen der Führung 22a anschlagen wird. Das weitere Ausfahren des Stempels 23a führt dann dazu, dass sich die linke Seite des Rings 28 in Fig. 1 über die gesamte Länge an den Rahmen 22c der Führung anlegt. Dies ist durch die schwimmende nicht zwangsgeführte Lagerung der Platte möglich und auch so gewollt. Entsprechende Überlegungen gelten für die Bewegungen, die auftreten, wenn die anderen Stempel der anderen Zylinder ausgefahren werden. Die gleichen Überlegungen gelten, egal wie die Fremdbetätigung erfolgt. Der Ring schlägt somit an der Innenseite des Rahmens und richtet sich von selber unter der abwechselnden Wirkung der Kraftzylinder immer wieder erneut aus. Der Ring und somit die Platte ist daher frei beweglich bzw freischwimmend innerhalb der seitlichen Begrenzung die durch den Rahmen gebildet ist, der deshalb auch die Funktion eines Anschlags hat. Es soll darauf hingewiesen werden, dass die freien Ende der Stempel nicht an dem Ring angelegt sind, sondern lediglich an den entsprechenden Innenseiten des Rings anliegen, wodurch die entsprechende Seiten des Rings unter Krafteinwirkung an die freien Enden der Stempel vorbeigleiten können.

Es wäre auch eine Anordnung denkbar bei der der Ring 28 auf die Führung 22 gleitet. Eine solche Anordnung führt dann zu keiner unerwuschten Zunahme der Bauhöhe wenn die Gleitbeschichtung bzw. die PTFE-Streifen 22b an einer Flachen Bodenplatte anstelle an den Rahmen 22a angeordnet wird bzw. werden. Bei einer solchen Anordnung kann die Gesamthöhe der Anordnung bestehend aus der Bodenplatte, den PTFE-Streifen, dem Ring 28 und der Platte 12 so gewählt werden, dass sie vergleichbar ist mit der Gesamthöhe der oben beschriebenen bevorzugten Anordnung mit dem Rahmen (innerhalb dessen der Ring angeordnet ist), den PTFE-Streifen und der Platte. Bei einer solchen Anordnung, bei der die PTFE-Streifen an der Bodenplatte befestigt sind, muss die Anschlagfunktion des Rahmens zur Begrenzung der Bewegungsamplitude des Ringes anderweitig realisiert werden. Dies könnte beispielsweise durch Winkeleisen erfolgen die außerhalb der PTFE-Streifen an der Bodenplatte angebracht werden und eine quadratischer oder rechteckiger Begrenzung bilden.

In Fig. 5 werden die Kraftzylinder der Fig. 1 durch vier Zugfedern 40a, 40b, 40c und 40d ergänzt, die sich diagonal zwischen Stellen 41a bis d an der Bodenplatte 26 nahe zum Zentrum der Bodenplatte und an den Ecken 43a bis d des Rings erstrecken und an diesen Stellen an der Bodenplatte bzw. an den Ecken befestigt sind. Die hier lediglich schematisch dargestellten Federn sind mit Stellschrauben versehen, die eine anfängliche Einstellung der Federkraft ermöglicht und zudem sicherstellen lässt, dass im Urzustand die Platte 12 gegenüber der Führung 22 zentriert angeordnet ist. Die weiteren Bezugszeichen in der Fig. 5 entsprechen denen der Ausführungsform gemäß den Fig. 1 bis 4 und haben die gleiche Bedeutung, weshalb sie hier nicht näher beschrieben werden. D.h., dass die bisherige Beschreibung auch für Teile gilt, die die gleiche Form oder Funktion haben wie die bisher beschriebenen Teile oder Elemente mit den gleichen Bezugszeichen. Diese Konvention gilt auch für die weiteren Ausführungsformen.

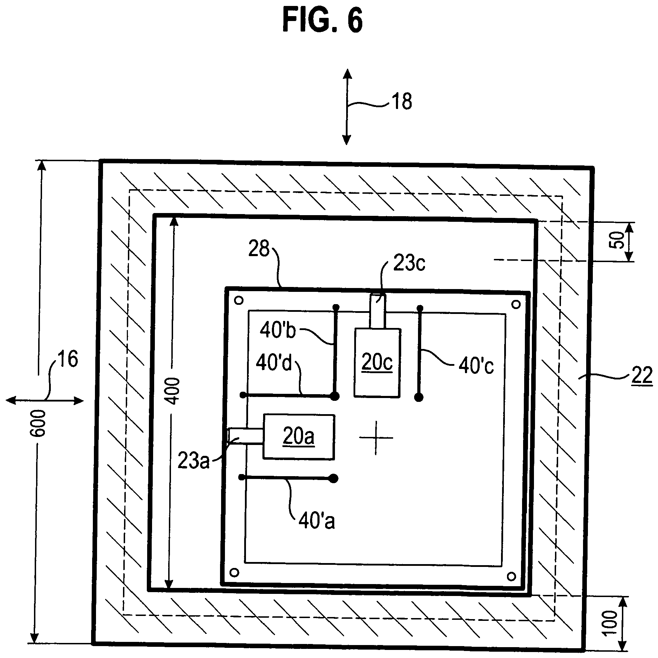

In der weiteren Ausführung gemäß Fig. 6 wird die Achsspielprüfeinrichtung dadurch gekennzeichnet, dass die Fremdkraftbetätigung durch lediglich zwei mittels Druckfluid ansteuerbare und ausfahrbare Kraftzylinder 20a, 20c gebildet ist, die mittels einer Federeinrichtung 40a, 40b, 40c, 40d zurück versetzbar sind. In diesem Beispiel sind die Rückstellfedern 40'a, 40'd, 40'b und 40'c im Vergleich zu Fig. 5 anders angeordnet. Es werden nämlich jeweils zwei Rückstellfedern 40a, 40b bzw. 40c, 40d einem Kraftzylinder 20a bzw. 20c zugeordnet und parallel zu dem jeweiligen Kraftzylinder angeordnet. Auch hier sind die Zugfedern 40'a, 40'b, 40'c, 40'd jeweils mit ihrem einen Ende an der Bodenplatte und an ihrem anderen Ende am Ring 28 befestigt. Die Ausgangsposition der Platte ist hier in der "unteren" rechten Ecke gewählt, was aber nicht zwingend erforderlich ist.

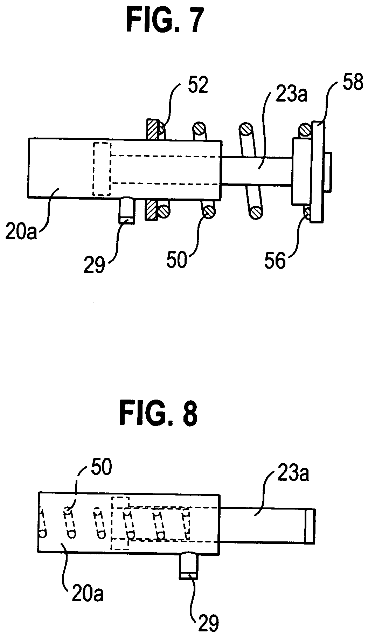

Die Fig. 7 und 8 zeigen zwei alternative Ausführungsbeispiele eines Kraftzylinders 20a, der in einer der bisher beschriebenen erfindungsgemäßen Anordnungen eingebaut werden kann. Bei der Ausführung gemäß Fig. 7 wird eine Schraubendruckfeder 50 an einem Ende 52 am Zylinder des Kraftzylinders 20a abgestützt und am anderen Ende 56 an einem Widerlager 58 am freien Ende des Stempels 23a. Diese Schraubendruckfeder dient somit dazu, den Stempel 23a auszufahren. Das Einfahren des Stempels gegen die Kraft der Feder erfolgt mittels eines pneumatischen oder hydraulischen Druckfluids, das von der Schalteinrichtung über eine entsprechende Leitung und den Anschluss 29 in den Kolbenraum des Zylinders 20a eingeführt wird. Sobald der Druck im Zylinder aufgrund des Umschaltens der Schalteinrichtung abnimmt, treibt die Schraubendruckfeder 50 den Stempel wieder aus dem Zylinder 20a heraus und das Druckfluid zu der Schalteinrichtung zurück.

Die Anordnung gemäß Fig. 8 ist ähnlich, nur wird hier die Schraubendruckfeder 50 in einer kompakten Anordnung innerhalb des Stempels angeordnet. Sie stützt sich am Boden des Zylinders 20a und an den Boden einer Sachbohrung im Stempel 23a ab. Denkbar sind schließlich auch Anordnungen eines Kraftzylinders, bei denen eine Zugfeder anstatt einer Druckfeder zur Anwendung gelangt. In diesem Fall wird der Stempel wie bisher mittels Druckfluidzufuhr ausgefahren und dann mittels der Kraft der Zugfeder wieder eingefahren.

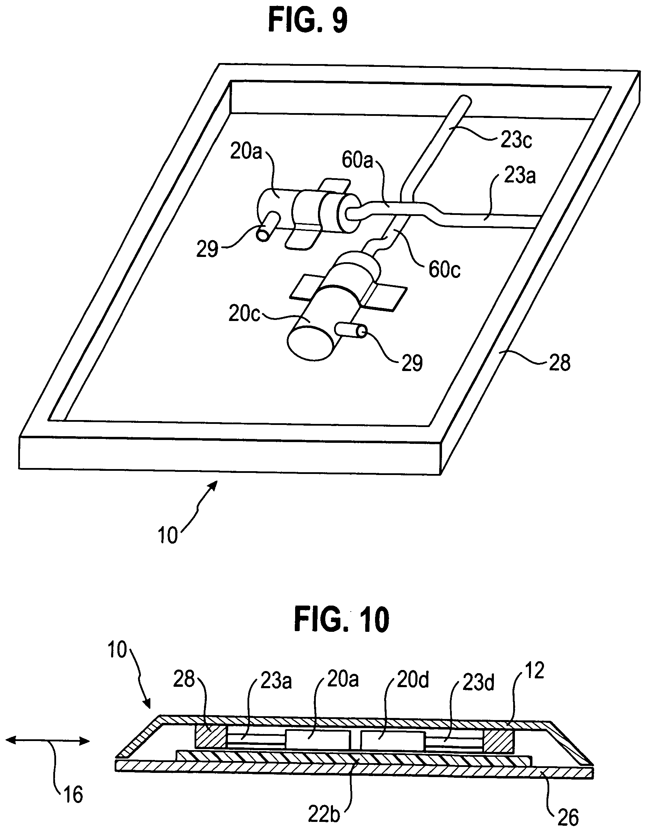

Die Fig. 9 zeigt eine Achsspielprüfeinrichtung, die sich dadurch auszeichnet, dass die Fremdkraftbetätigung durch zwei jeweils mit Druckfluid ausfahrbare und einfahrbare Kraftzylinder 20a, 20c, d.h. durch doppelt wirkende Kraftzylinder 20a, 20c, ausgebildet ist, die kreuzförmig angeordnet sind. Dabei weisen die Stempel 23a, 23c der beiden Kraftzylinder im Überlappungsbereich jeweilige Mulden 60a und 60c auf, die es ermöglichen, die zwei Kraftzylinder möglichst in einer Ebene anzuordnen, wodurch die Bauhöhe der gesamten Achsspielprüfeinrichtung 10 wunschgemäß niedrig gehalten werden kann.

An dieser Stelle soll betont werden, dass die Fremdkraftbetätigung nicht ausschließlich mittels eines Druckfluids bewirkt werden kann, sondern es kämen auch andere Betätigungseinrichtungen in Frage, beispielsweise in Form von elektrischen Motoren bzw. Linearmotoren oder Schrittmotoren, die elektrisch angesteuert werden können. Auch eine Handhebelbetätigung käme für die Fremdkraftbetätigung in Frage. Hier könnte beispielsweise ein Kreuzgelenk unmittelbar unterhalb des Rahmens angeordnet werden, das einen Hebel trägt, der einen langen nach unten ragenden Arm zur Betätigung durch den Prüfer aufweist sowie einen kürzeren nach oben ragenden Arm, der an die Platte oder den Ring angreift.

Schließlich zeigt die Fig. 10 anhand einer Querschnittszeichnung, dass die Gleitstreifen 22b unterhalb des Rings 28 an der Bodenplatte 26 angeordnet werden können, wodurch die Konstruktion weiter vereinfacht werden kann. Die Gleitstreifen 22b könnten auch an der Unterseite des Rings 28 angebracht werden und auf der Bodenplatte 26 gleiten. Sie könnten dann kleiner ausgeführt werden als in der dargestellten Anordnung, bei der sie so breit gemacht werden müssen, dass sie die Breite des Rings 28 und die Amplitude der Bewegung des Rings 28 abdecken. Auch hier liegt die Führung der Platte 12 in einer Ebene 14 und auch hier wird eine kleine Bauhöhe erreicht. Die Kraftzylinder, von denen nur die Kraftzylinder 20a und 20d hier ersichtlich sind, sind in Aussparungen in der Bodenplatte teilweise versenkt, wodurch die Bauhöhe ebenfalls verkleinert werden kann.

## Patentansprüche

1. Achsspielprüfeinrichtung (10) bestehend aus einer Fremdkraftbetätigung und aus einer oberen zur Abstützung eines Rads ausgelegten Platte (12), die in einer Ebene (14) in zwei voneinander verschiedenen Richtungen (16, 18) durch die Fremdkraftbetätigung bewegbar ist, wobei eine Führung (22) für die in zwei voneinander verschiedenen Richtungen bewegliche Platte (12) vorgesehen ist, **dadurch gekennzeichnet, dass** die bewegliche Platte (12) an einem Ring (28) befestigt ist, wobei
entweder der Ring (18) innerhalb der Führung (22) mit Spiel angeordnet ist, die die Platte (12) in deren Umfangsbereich abstützt,
oder der Ring (18) oberhalb der Führung liegt und auf dieser gleitbar ist, der die Platte (12) in deren Umfangsbereich abstützt, und dass die Fremdkraftbetätigung (20a, 20b, 20c, 20d; 20a, 20c) für die in zwei voneinander verschiedenen Richtungen bewegliche Platte sich innerhalb des Rings (28) befindet und an diesen zur Bewegung der Platte (12) angreift.

2. Achsspielprüfeinrichtung (10) nach Anspruch 1, -**dadurch gekennzeichnet, dass** die Platte (12) in Längs- und Querrichtung (16, 18) des darauf abgestützten Rads bzw. des entsprechenden Fahrzeugs bewegbar ist und dass die Führung (22) die Platte (12) in dessen Umfangsbereich abstützt.

3. Achsspielprüfeinrichtung (10) nach einem der vorhergehenden Ansprüche, **dadurch gekennzeichnet, dass** die Fremdkraftbetätigung durch vier getrennt ansteuerbare Kraftzylinder (20a, 20b, 20c, 20d) gebildet ist, die paarweise entgegengesetzt in zwei voneinander verschiedenen Richtungen (16, 18)angeordnet sind.

4. Achsspielprüfeinrichtung (10) nach Anspruch 3, **dadurch gekennzeichnet, dass** bei jedem Paar (20a, 20d; 20b, 20c) der entgegengesetzten Kraftzylinder (20a; 20b) das durch Druckfluidzufuhr bewirkte Ausfahren des einen Zylinders (20a, 20b, 20c, 20d zur Zurückstellung des jeweils anderen zuletzt eingefahrenen Zylinders (20d; 20c) führt.

5. Achsspielprüfeinrichtung (10) nach Anspruch 4, **dadurch gekennzeichnet, dass** eine Schalteinrichtung (24) vorgesehen ist, die die Kraftzylinder (20a, 20b, 20c, 20d) jedes Paares (20a, 20d; 20b, 20c) wechselweise ansteuert.

6. Achsspielprüfeinrichtung (10) nach Anspruch 5, **dadurch gekennzeichnet, dass** eine Einrichtung vorgesehen ist, um nach dem Ausfahren des einen Zylinders (20a) des einen Paares (20a, 20d) den Ansteuerdruck herabzusetzen, vor dem Ausfahren des einen Zylinders (20b) des jeweils anderen Paares (20b, 20c) und umgekehrt.

7. Achsspielprüfeinrichtung (10) nach Anspruch 6, **dadurch gekennzeichnet, dass** die zwei Zylinderpaare (20a, 20d; 20b, 20c) jeweils abwechselnd angesteuert werden.

8. Achsspielprüfeinrichtung (10) nach einem der Ansprüche 1 oder 2, **dadurch gekennzeichnet, dass** die Fremdkraftbetätigung durch zwei jeweils mit Druckfluid ausfahrbare und einfahrbare Kraftzylinder (20a, 20c), d.h. durch doppelt wirkende Kraftzylinder, ausgebildet ist, die an der Platte (12) bzw. am Ring (28) angreifen oder kreuzförmig angeordnet sind.

9. Achsspielprüfeinrichtung (10) nach einem der Ansprüche 1 oder 2, **dadurch gekennzeichnet, dass** die Fremdkraftbetätigung durch zwei mittels Druckfluid ansteuerbare und ausfahrbare Kraftzylinder (20a, 20c) gebildet ist, die jeweils mittels einer Federeinrichtung (40'a, 40'd; 40'b, 40'c) zurück versetzbar sind.

10. Achsspielprüfeinrichtung (10) nach einem der Ansprüche 3 bis 9, **dadurch gekennzeichnet, dass** die Kraftzylinder (20a, 20b, 20c, 20d; 20a, 20c) mittels Druckluft betätigbar sind.

11. Achsspielprüfeinrichtung (10) nach einem der vorhergehenden Ansprüche, **dadurch gekennzeichnet, dass** die Führung (22) durch einen Rahmen (22a) gebildet ist, die mit reibungsminderndem Gleitmaterial (22b) an der der Platte (12) zugewandten Fläche versehen bzw. verkleidet ist, auf der die Platte bewegbar ist und dass die Rahmenhöhe ausreichend groß bemessen ist, dass der Ring (28) sowie die Fremdkraftbetätigung innerhalb des Rahmens (22a) und unterhalb der Platte (12) Platz hat.

12. Achsspielprüfeinrichtung (10) nach Anspruch 11, **dadurch gekennzeichnet, dass** der Rahmen (22a) an einer Bodenplatte (26) befestigt ist, die die Achsprüfeinrichtung nach unten abschließt und am Boden bzw. an einer Fahrschiene einer Hebebühne oder einer Grube befestigbar ist.

13. Achsspielprüfeinrichtung (10) nach einem der vorhergehenden Ansprüche 10 bis 12, **dadurch gekennzeichnet, dass** die Führung (22) durch einen Rahmen (22a) gebildet ist, die mit reibungsminderndem Gleitmaterial (22b) an der der Platte (12) zugewandten Fläche versehen bzw. verkleidet ist und dass die Platte (12) an zwei entgegengesetzten Seiten (24a, 24d) nach unten abgewinkelt ist, um das Anfahren und Abfahren des zu prüfenden Fahrzeugs zu ermöglichen.

14. Achsspielprüfeinrichtung (10) nach einem der vorhergehenden Ansprüche 1 bis 10, **dadurch gekennzeichnet, dass** Gleitstreifen 22b an der Unterseite des Rings 28 angebracht sind und auf einer Bodenplatte 26 gleitet.

15. Achsspielprüfeinrichtung (10) insbesondere nach einem der vorhergehenden Ansprüche, **dadurch gekennzeichnet, dass** deren gesamte Bauhöhe bei der Auslegung für Fahrzeuge bis 3,5 t 70 mm oder weniger beträgt und bei der Auslegung für Fahrzeuge mit einem Gesamtgewicht im Bereich über 3,5 t 100 mm oder weniger beträgt.

16. Achsspielprüfeinrichtung (10) wahlweise nach einem der vorhergehenden Ansprüche, **dadurch gekennzeichnet, dass** die Platte (12) ohne Zwangsführung schwimmend gelagert ist, d.h. ohne richtungsgeführte Laufschienen.

## Claims

1. An axle clearance testing device (10) comprising an external power operation means and an upper plate (12) which is designed for supporting a wheel and which can be moved in a plane (14) in two directions (16, 18) that differ from one another by the external power operation means, wherein a guide (22) is provided for the plate (12) movable in two directions that differ from one another, **characterized in that** the movable plate (12) is fastened to a ring (28), with either the ring (18) being arranged with clearance within the guide (22), which supports the plate (12) in its peripheral region, or the ring (18) being disposed above the guide and being slidable thereon, said guide supporting the plate (12) in its peripheral region; and **in that** the external power operation means (20a, 20b, 20c, 20d; 20a, 20c) for the plate movable in two directions that differ from one another is located within the ring (28) and engages thereat to move the plate (12).

2. An axle clearance testing device (10) in accordance with claim 1, **characterized in that** the plate (12) is movable in a longitudinal and transverse direction (16, 18) of the wheel supported thereon or of the corresponding vehicle; and **in that** the guide (22) supports the plate (12) in its peripheral region.

3. An axle clearance testing device (10) in accordance with one of the preceding claims, **characterized in that** the external power operation means is formed by four separately controllable power cylinders (20a, 20b, 20c, 20d) which are arranged oppositely in pairs in two directions (16, 18) that differ from one another.

4. An axle clearance testing device (10) in accordance with claim 3, **characterized in that**, for each pair (20a, 20d; 20b, 20c) of the oppositely arranged power cylinders (20a; 20b), the extension of the one cylinder (20a, 20b, 20c, 20d) effected by a pressure fluid supply results in the setting back of the respective other last retracted cylinder (20d; 20c).

5. An axle clearance testing device (10) in accordance with claim 4, **characterized in that** a switching device (24) is provided which alternately controls the power cylinders (20a, 20b, 20c, 20d) of each pair (20a, 20d; 20b, 20c).

6. An axle clearance testing device (10) in accordance with claim 5, **characterized in that** a device is provided to reduce the control pressure after the extension of the one cylinder (20a) of the one pair (20a, 20d) before the extension of the one cylinder (20b) of the respective other pair (20b, 20c) and vice versa.

7. An axle clearance testing device (10) in accordance with claim 6, **characterized in that** the two cylinder pairs (20a, 20d; 20b, 20c) are controlled alternately in each case.

8. An axle clearance testing device (10) in accordance with one of the claims 1 or 2, **characterized in that** the external power operation means is formed by two power cylinders (20a, 20c) which are each extendable and retractable by pressure fluid, i.e. by dual action power cylinders, and which respectively engage at the plate (12) and at the ring (28) or which are arranged in the shape of a cross.

9. An axle clearance testing device (10) in accordance with one of the claims 1 or 2, **characterized in that** the external power operation means is formed by two power cylinders (20a, 20c) which are controllable and extendable by means of pressure fluid and which can each be set back by means of a spring device (40'a, 40'd; 40'b, 40'c).

10. An axle clearance testing device (10) in accordance with any one of the claims 3 to 9, **characterized in that** the power cylinders (20a, 20b, 20c, 20d; 20a, 20c) are operable by means of compressed air.

11. An axle clearance testing device (10) in accordance with any one of the preceding claims, **characterized in that** the guide (22) is formed by a frame (22a) which is provided or lined with a friction-reducing sliding material (22b) at the surface which faces the plate (12) and on which the plate is movable; and **in that** the frame height is dimensioned sufficiently large that the ring (28) and the external power operation means have space within the frame (22a) and beneath the plate (12).

12. An axle clearance testing device (10) in accordance with claim 11, **characterized in that** the frame (22a) is fastened to a base plate (26) which downwardly terminates the axle testing device and which is fastenable to the ground or to a track of a lifting platform or of a pit.

13. An axle clearance testing device (10) in accordance with any one of the preceding claims 10 to 12, **characterized in that** the guide (22) is formed by a frame (22a) which is provided or lined with a friction-reducing sliding material (22b) at the surface which faces the plate (12); and **in that** the plate (12) is angled downwardly at two opposite sides (24a, 24d) to enable the driving toward and driving away of the vehicle that is to be tested.

14. An axle clearance testing device (10) in accordance with any one of the preceding claims 1 to 10, **characterized in that** sliding strips 22b are attached to the lower side of the ring 28 and slide on a base plate 26.

15. An axle clearance testing device (10) in particular in accordance with any one of the preceding claims, **characterized in that** its total construction height amounts to 70mm or less in the design for vehicles of up to 3.5 t and amounts to 100mm or less in the design for vehicles having a total weight in the range of more than 3.5 t.

16. An axle clearance testing device (10) selectively in accordance with any one of the preceding claims, **characterized in that** the plate (12) is supported in a floating manner without a compulsory guidance, i.e. without directionally guided running rails.

## Revendications

1. Dispositif (10) de contrôle du jeu des essieux, constitué d'un actionnement par force externe et d'une plaque supérieure (12) destinée à supporter une roue, qui est mobile dans un plan (14) dans deux directions (16, 18) différentes l'une de l'autre par l'actionnement par force externe,
dans lequel
un guidage (22) est prévu pour la plaque (12) mobile dans deux directions différentes l'une de l'autre,
**caractérisé en ce que**
la plaque mobile (12) est fixée à un anneau (28), soit l'anneau (18) étant disposé avec jeu à l'intérieur du guidage (22) qui soutient la plaque (12) dans sa région périphérique, soit l'anneau (18) étant situé au-dessus du guidage et pouvant coulisser sur celui-ci, qui soutient la plaque (12) dans sa région périphérique, et **en ce que**
l'actionnement par force externe (20a, 20b, 20c, 20d ; 20a, 20c) pour la plaque mobile dans deux directions différentes l'une de l'autre est situé à l'intérieur de l'anneau (28) et agit sur lui pour déplacer la plaque (12).

2. Dispositif (10) de contrôle du jeu des essieux selon la revendication 1, **caractérisé en ce que**
la plaque (12) est mobile dans les directions longitudinale et transversale (16, 18) de la roue ou du véhicule correspondant qui s'appuie sur ladite plaque, et **en ce que**
le guidage (22) soutient la plaque (12) dans sa région périphérique.

3. Dispositif (10) de contrôle du jeu des essieux selon l'une des revendications précédentes,
**caractérisé en ce que**
l'actionnement par force externe est formé par quatre vérins (20a, 20b, 20c, 20d) pilotables séparément, qui sont disposés par paires en sens opposés dans deux directions (16, 18) différentes l'une de l'autre.

4. Dispositif (10) de contrôle du jeu des essieux selon la revendication 3,
**caractérisé en ce que**
pour chaque paire (20a, 20d ; 20b, 20c) de vérins opposés (20a ; 20b), le déploiement d'un vérin (20a, 20b, 20c, 20d) provoqué par l'alimentation en fluide sous pression entraîne le retour de l'autre cylindre (20d ; 20c) qui a été rétracté en dernier.

5. Dispositif (10) de contrôle du jeu des essieux selon la revendication 4,
**caractérisé en ce que**
il est prévu un moyen de commutation (24) qui pilote en alternance les vérins (20a, 20b, 20c, 20d) de chaque paire (20a, 20d ; 20b, 20c).

6. Dispositif (10) de contrôle du jeu des essieux selon la revendication 5,
**caractérisé en ce que**
il est prévu un moyen pour réduire la pression de pilotage après déploiement d'un vérin (20a) d'une paire (20a, 20d), avant déploiement d'un vérin (29b) de l'autre paire respective (20b, 20c), et inversement.

7. Dispositif (10) de contrôle du jeu des essieux selon la revendication 6,
**caractérisé en ce que**
les deux paires de vérins (20a, 20d ; 20b, 20c) sont pilotés respectivement en alternance.

8. Dispositif (10) de contrôle du jeu des essieux selon l'une des revendications 1 ou 2,
**caractérisé en ce que**
l'actionnement par force externe est réalisé par deux vérins (20a, 20c), chacun pouvant être déployé et rétracté par un fluide sous pression, c'est-à-dire par des vérins à double effet, qui agissent sur la plaque (12) ou sur l'anneau (28) ou sont disposés en croix.

9. Dispositif (10) de contrôle du jeu des essieux selon l'une des revendications 1 ou 2,
**caractérisé en ce que**
l'actionnement par force externe est formé par deux vérins (20a, 20c) pilotables et déployables par un fluide sous pression, qui peuvent chacun être rappelés à l'aide d'un moyen formant ressort (40'a, 40'd ; 40'b, 40'c).

10. Dispositif (10) de contrôle du jeu des essieux selon l'une des revendications 3 à 9,
**caractérisé en ce que**
les vérins (20a, 20b, 20c, 20d ; 20a, 20c) sont actionnables par de l'air sous pression.

11. Dispositif (10) de contrôle du jeu des essieux selon l'une des revendications précédentes,
**caractérisé en ce que**
le guidage (22) est formé par un cadre (22a) pourvu ou revêtu d'un matériau de glissement (22b) réduisant la friction sur la face tournée vers la plaque (12), sur laquelle la plaque est mobile, et **en ce que** la hauteur du cadre est dimensionnée suffisamment grande pour que l'anneau (28) ainsi que l'actionnement par force externe ont de la place à l'intérieur du cadre (22) et au-dessous de la plaque (12).

12. Dispositif (10) de contrôle du jeu des essieux selon la revendication 11,
**caractérisé en ce que**
le cadre (22a) est fixé à une plaque de sol (26) qui termine le dispositif de contrôle d'essieux vers le bas et qui peut être fixée au sol ou sur un rail de déplacement d'une plate-forme de levage ou d'une fosse.

13. Dispositif (10) de contrôle du jeu des essieux selon l'une des revendications 10 à 12,
**caractérisé en ce que**
le guidage (22) est formé par un cadre (22a) pourvu ou revêtu d'un matériau de glissement (22b) réduisant la friction sur la face tournée vers la plaque (12), et **en ce que**
la plaque (12) est coudée vers le bas sur deux côtés opposés (24a, 24d) pour permettre l'arrivée et le départ du véhicule à contrôler.

14. Dispositif (10) de contrôle du jeu des essieux selon l'une des revendications 1 à 10,
**caractérisé en ce que**
des rubans de glissement 22b sont montés sur la face inférieure de l'anneau 28 et glissent sur une plaque de sol 26.

15. Dispositif (10) de contrôle du jeu des essieux, en particulier selon l'une des revendications précédentes,
**caractérisé en ce que**
son hauteur structurelle totale est de 70 mm ou moins lors d'une conception pour des véhicules jusqu'à 3,5 t, et est de 100 mm ou moins lors d'une conception pour des véhicules d'un poids total de plus de 3,5 t.

16. Dispositif (10) de contrôle du jeu des essieux au choix selon l'une des revendications précédentes,
**caractérisé en ce que**
la plaque (12) est montée flottant sans guidage forcé, c'est-à-dire sans rails de déplacement guidés en direction.
